Europäisches Patentamt

European Patent Office

Office européen des brevets

(11) Veröffentlichungsnummer: **0 427 130 A2**

# (12) EUROPÄISCHE PATENTANMELDUNG

(21) Anmeldenummer: **90121019.5**

(22) Anmeldetag: **02.11.90**

(51) Int. Cl.⁵: **F16M 11/24**

(30) Priorität: **10.11.89 DE 3937518**

(43) Veröffentlichungstag der Anmeldung:
**15.05.91 Patentblatt 91/20**

(84) Benannte Vertragsstaaten:
**AT BE CH DE DK ES FR GB IT LI NL SE**

(71) Anmelder: **F.M.K. Kreuzer GmbH & Co. KG**
**Benzstrasse 26**
**W-8039 Puchheim(DE)**

(72) Erfinder: **Kreuzer, Friedhelm**
**Frihindorfstrasse 1a**
**W-8000 München 60(DE)**

(74) Vertreter: **Prüfer, Lutz H., Dipl.-Phys.**
**Harthauser Strasse 25d**
**W-8000 München 90(DE)**

(54) **Geräteträger.**

(57) Es wird ein Geräteträger geschaffen, wie er insbesondere bei in Intensivstationen von Krankenhäusern verwendeten Stativen angewendet wird. Damit an dem Stativ möglichst viele Geräte wie Pumpen und ähnliches anbringbar und relativ zum Stativ bewegbar sind, weist ein Tragarm 2 zum Aufnehmen von Tragelementen für Geräte und mit Zuführungen zum Betreiben dieser Geräte wenigstens eine sich in seiner Längsrichtung erstreckende Nut 18 zum Aufnehmen eines in der Nut verschiebbar und um eine Achse relativ zum Tragarm schwenkbares Halteelement auf.

Fig. 3

EP 0 427 130 A2

## GERÄTETRÄGER

Die Erfindung betrifft einen Geräteträger mit einem Arm zum Aufnehmen von Tragelementen für Geräte und mit Zuführungen zum Betreiben von Geräten oder ähnlichem. Derartige Geräteträger werden insbesondere zur Aufnahme von medizinischen Geräten verwendet, insbesondere auch in Form von sogenannten Decken-oder Wandstativen.

Ein derartiger Geräteträger bzw. Stativ ist beispielsweise in der DE 36 27 517 A1 beschrieben. An Querauslegern sind Geräteträger in Form von Stativarmen angebracht, an denen in einer vorbestimmten Höhe Tragelemente zum Aufnehmen von Geräten vorgesehen sind. Die Geräteträger in Form der Stativarme sind rohrförmig ausgebildet. Im Innern dieser Rohre werden die Versorgungsleitungen geführt, die an einer vorbestimmten Stelle zum Anschluß an die aufzunehmenden Geräte herausgeführt sind. Die Halteelemente sind an den Stativarmen fest angebracht.

Aufgabe der Erfindung ist es, einen Geräteträger der eingangs beschriebenen Art und insbesondere in der Form von Stativarmen so auszubilden, daß es leicht möglich ist, an dem Tragelement Halteelemente anzubringen oder abzunehmen bzw. diese in ihrer Höhe relativ zu verstellen, die zur Aufnahme von Pumpen und ähnlichem dienen.

Diese Aufgabe wird durch den in Patentanspruch 1 gekennzeichneten Geräteträger gelöst.

Weiterbildungen der Erfindung sind in den Unteransprüchen gekennzeichnet.

Weitere Merkmale und Zweckmäßigkeiten der Erfindung werden anhand eines Ausführungsbeispieles unter Bezugnahme auf die Figuren beschrieben. Von den Figuren zeigen:

Fig. 1 eine schematische Darstellung eines Statives mit einem Geräteträger;

Fig. 2 eine Schnittdarstellung entlang der Schnittlinie III-III in vergrößertem Maßstab;

Fig. 3 eine perspektivische Seitenansicht einer ersten Ausführungsform;

Fig. 4 eine perspektivische Seitenansicht einer zweiten Ausführungsform;

Fig. 5 einen Schnitt durch ein verwendetes Profil;

Fig. 6 einen Schnitt entlang der Linie VI-VI in Fig. 3;

Fig. 7 einen sich durch die Schwenkachse eines Gelenkes erstreckenden Schnitt;

Fig. 8 einen Schnitt entlang der Schnittlinie VIII-VIII in Fig. 3;

Fig. 9 eine Seitenansicht des in Fig. 8 gezeigten Teiles in einer Richtung senkrecht zu der in Fig. 8 gezeigten Schnittrichtung.

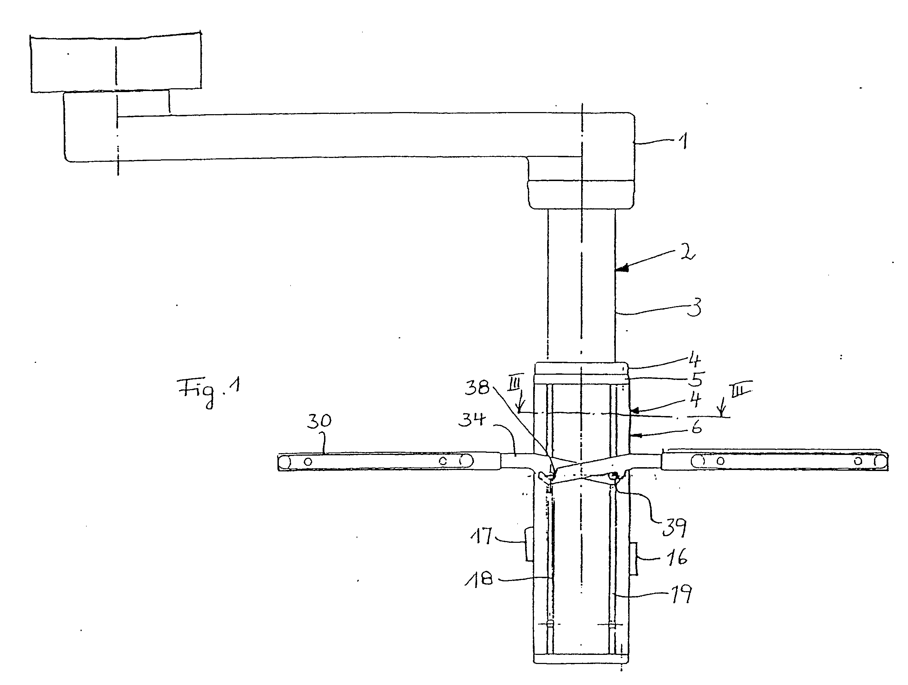

Das in Fig. 1 gezeigte Stativ weist einen Stativarm 1 mit einem an diesem getragenen Tragarm 2 auf. Der Tragarm 2 weist einen mit dem Stativarm verbundenen säulenförmigen Abschnitt 3 und einen über Flansche 4, 5 mit diesem verbundenen profilförmigen Abschnitt 6 auf.

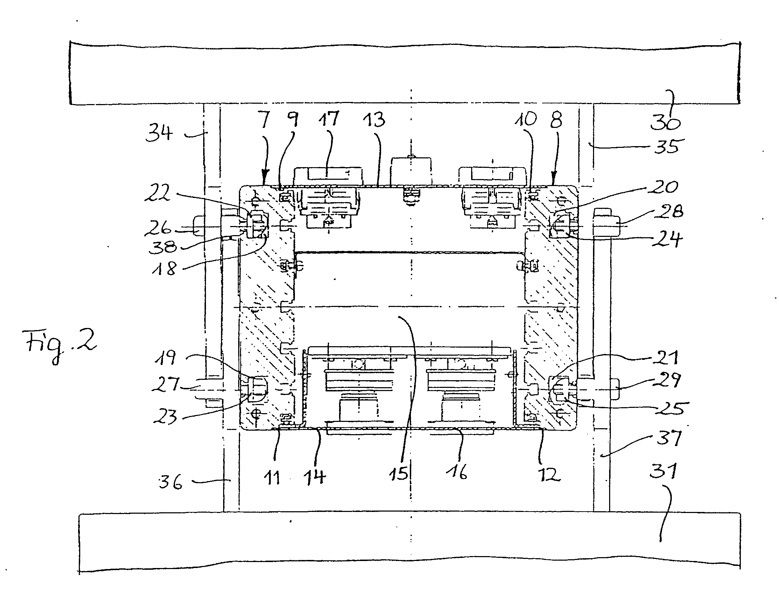

Der profilförmige Abschnitt weist, wie am besten aus Fig. 2 ersichtlich ist, zwei zueinander parallele Wandungen 7, 8 auf.

Die Wandungen besitzen an ihren jeweiligen zugewandten Enden der Stirnseiten Ausnehmungen 9 - 12. In diese sind quer zu den Wandungen erstreckende Wandteile 13, 14 eingesetzt und mit den Wandungen verschraubt, so daß die Wandungen und Wandteile gemeinsam einen Kanal 15 umschließen, der zum Hindurchführen von Versorgungsleitungen zu in den Wandteilen 13 und 14 angebrachten Anschlüssen 16, 17 dient.

Jede der Wandungen 7, 8 weist auf ihrer Breitseite in einem Abstand voneinander und jeweils nahe zu den Seitenrändern und parallel zu diesen sich erstreckende T-förmige Nuten 18 - 21 auf. Alle vier Nuten laufen parallel zueinander und parallel zur Kanalachse und damit zu der Achse des Tragarmes 2 selbst.

In jeder der Nuten ist wenigsten eine entlang der Nut verschiebbare Mutter 22 - 25 vorgesehen, die mit einer einen bolzenförmigen Abschnitt aufweisenden Schraube 26 - 29 als Halteelement zusammenwirkt. Durch Lösen der Schraube kann das Halteelement in seiner Höhe entlang der Nut verstellt werden. Auf diese Weise können über die gesamte Länge der Nuten 18, 19 die Halteelemente in der Höhe so eingestellt werden, daß daran anzubringende Träger 30, 31 angesetzt werden können. Jeder der Träger weist an seiner mit dem Tragarm zu verbindenden Seite ein gabelförmiges Paar Arme 34 - 37 auf. Jeder der Arme weist an seinem freien Ende auf der Oberseite eine Rille 38 auf, die in ihrer Abmessung so gewählt ist, daß die damit in Eingriff zu bringende Schraube 27 hineinpaßt. In einem dem Abstand der beiden Nuten 18, 19 entsprechenden Abstand weist der Träger auf seiner Unterseite eine Ausnehmung 39 auf, die die zugehörige Schraube 26 aufnimmt. Wie am besten aus Fig. 1 ersichtlich ist, ist das freie Ende des Trägers dabei relativ zur Plattform des Trägers so geneigt, daß bei horizontaler Anordnung der Plattform die oben liegende Rille 38 und die unten liegende Ausnehmung 39 in einer Ebene parallel zur Plattform liegen.

Im Betrieb werden für jede gewünschte Höhenstellung eines Trägers vier Halteelemente in der entsprechenden Höhe arretiert. Anschließend wird die Plattform dadurch befestigt, daß die Gabeln mit ihren freien Enden unter die fernliegenden Halteelemente greifen und mit den der Plattform zugewandten Enden auf dem zweiten Halteelementenpaar aufliegt. Wie aus den Figuren ersichtlich ist, haben die Halteelemente eine solche Abmessung, daß jeweils ein gegenüberliegendes Trägerpaar an diesen angreifen kann.

Wie aus Fig. 2 ersichtlich ist, sind die Ausnehmungen 9 bis 12 ebenfalls als T-förmige Rillen ausgebildet, die sich parallel zur Kanalachse erstrecken, so daß das Anbringen der Wandteile 13, 14 durch in den Nuten versetzbare Schrauben erleichtert wird.

Wie ferner aus Fig. 2 ersichtlich ist, weisen die beiden Wandungen 7 und 8 auch auf ihren einander zugewandten Innenseiten T-förmige Nuten auf, so daß in der Höhe einstellbare Armaturen oder ähnliches auch im Kanalinneren anbringbar sind.

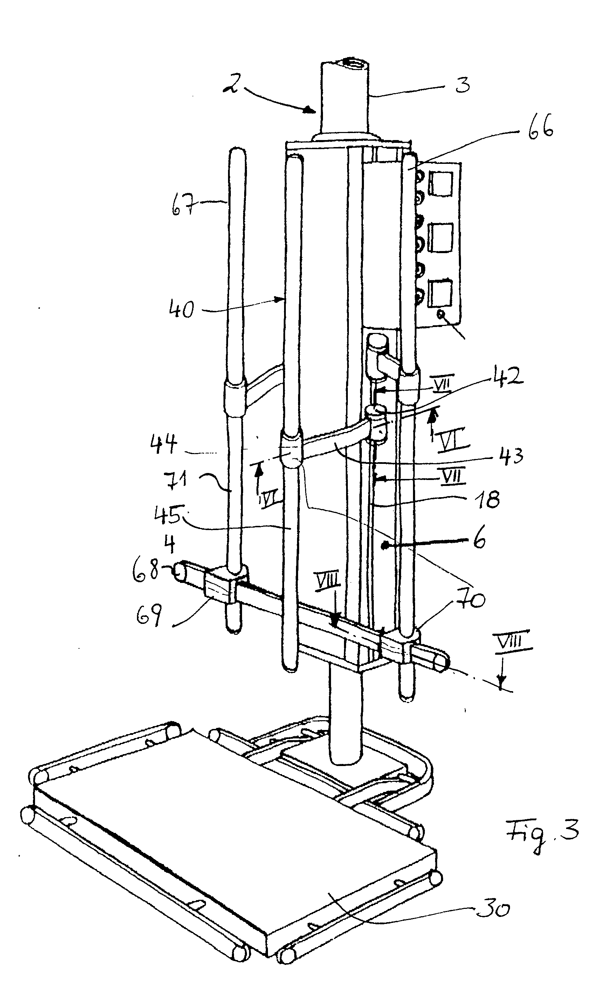

Wie am besten aus Fig. 3 ersichtlich ist, ist an dem Abschnitt 6 des Tragarmes 2 ein erstes Halteelement 40 angebracht. Dieses weist ein mit dem Tragarm befestigbares Gelenk 42, ein als Arm ausgebildetes und mit dem Gelenk 42 verbundenes zweites Teil 43, eine an dem freien Ende des zweiten Teiles vorgesehene Halterung 44 und eine von letzterer getragene Stange 45 auf. Die Stange 45 dient zur Aufnahme von Pumpen und ähnlichen Geräten, die insbesondere bei der ärztlichen Versorgung von Patienten erforderlich sind.

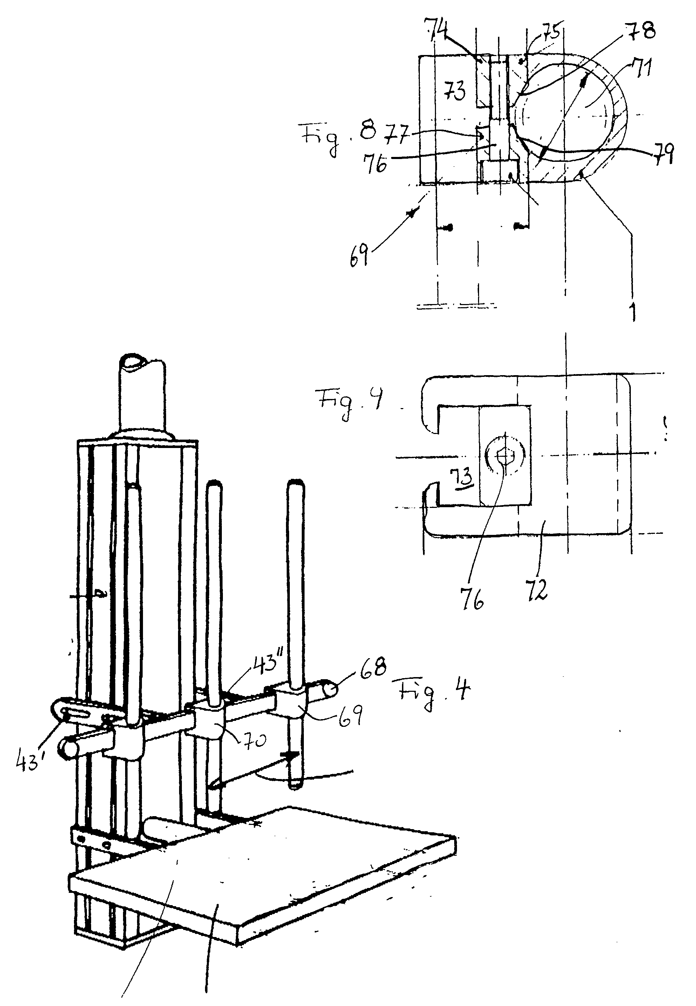

Das Gelenk 42 ist im Detail in den Figuren 5 bis 7 dargestellt. Das Drehgelenk weist ein oberes Fassungsteil 46 und ein unteres Fassungsteil 47 auf. Jedes Fassungsteil weist auf den einander zugewandten Seiten eine Ausnehmung 48 bzw. 49 mit einer nutenartigen Hinterschneidung 50 auf. In einer Richtung senkrecht zur jeweiligen Achse der Ausnehmungen 48, 49 ist eine Bohrung 51 bzw. 52 zur Aufnahme einer Schraube 53 bzw. 54 vorgesehen.

Der armförmige zweite Teil 43 weist an seinem dem Gelenk zugewandten Teil einen sich senkrecht zum armförmigen Teil 43 erstreckenden Gelenkzapfen 55 auf. Dieser weist an seinem oberen und an seinem unteren Ende hervorstehende Ansätze 56, 57 auf, die aus einem Hals 58 und einem auf diesem sitzenden Abschnitt größeren Durchmessers 59 auf. Die Abmessungen von Hals 58 und erweitertem Abschnitt 59 sind so bemessen, daß der erweiterte Abschnitt bei Einsetzen in die jeweilige Ausnehmung 48 bzw. 49 einsetzbar ist und mit dem erweiterten Abschnitt gerade in die nutenartige Hinterschneidung 50 eingreift und von dieser geführt wird.

Zwischen oberem und unterem Fassungsteil 46, 47 ist auf der der Nut 18 zugewandten Rückseite ein Teil 41 vorgesehen. Dieses weist einen in die Nut 18 hineinpassenden rückseitigen Abschnitt 60 zum Einsetzen in die Nut auf. Auf seiner dem Gelenk zugewandten Seite sind zwei sich in Richtung der Nut erstreckende und zueinander geneigte Widerlagerflächen 61, 62 vorgesehen, die einen nutenförmigen Grund 63 in der Mitte des Teiles 41 bilden, der sich parallel zur Richtung der Nut erstreckt.

Das Gelenk ist so montiert, daß auf den Gelenkzapfen 55 das obere und das untere Fassungsteil 46, 47 aufgesetzt werden und das so zusammen gesetzte Gelenk mit dem Teil 41 auf seiner Rückseite in die Nut 18 eingeführt wird und das ganze Gelenk dann mit Hilfe der Schrauben 53, 54 und mit diesen zusammenwirkenden und im Inneren der Nut angeordneten Muttern 64, 65 an dem Abschnitt 6 befestigt werden.

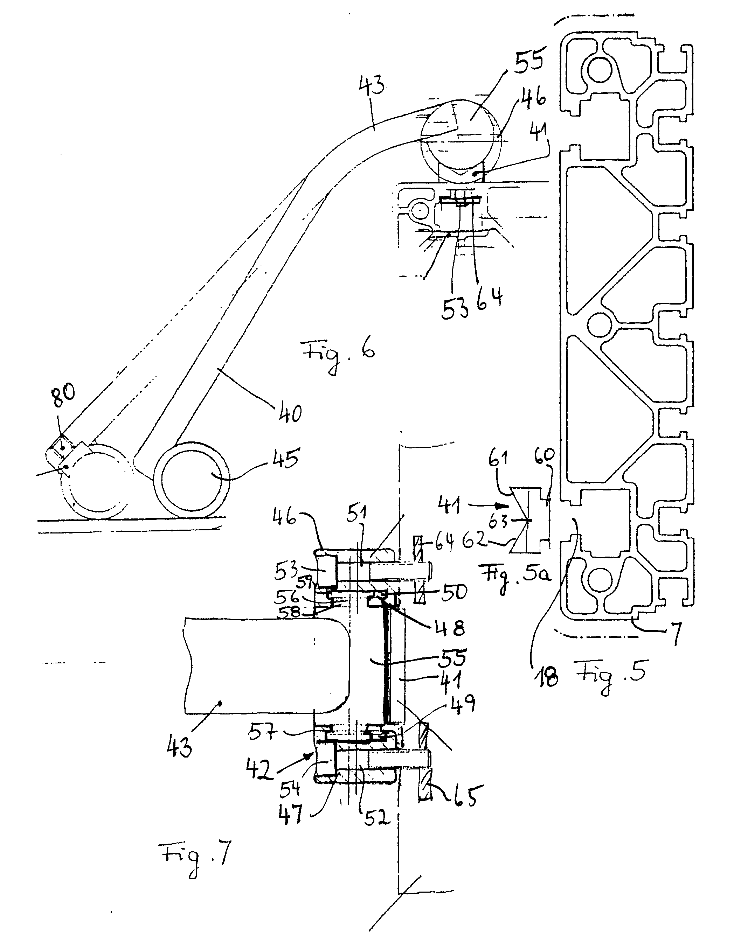

Wie am besten aus Fig. 7 ersichtlich ist, ist der Durchmesser der Ausnehmungen 48, 49 wesentlich größer als der Durchmesser von Hals 58 und erweitertem Abschnitt 59. Durch ein Anziehen der Schrauben 53, 54 wird der Gelenkzapfen 55 gegen die beiden Flächen 61, 62 so gedrückt, daß eine Arretierung des Gelenkes gegen Verschwenken erzeugt wird.

Wie aus Figur 3 ersichtlich ist, kann zusätzlich zu der Halterung oder auch anstelle der Halterung ein weiteres Paar von entsprechend ausgebildeten Halterungen 66, 67 vorgesehen sein. Dieses Paar ist dann durch eine Querverstrebung 68 und zugehörige Gelenke 69, 70 miteinander verbunden. Der Aufbau der Gelenke 69, 70 ist in den Figuren 8 und 9 im einzelnen gezeigt. Das Gelenk weist einen die aufzunehmende Stange 71 auffassenden zylindrischen Abschnitt 72 auf. An einer Seite des zylindrischen Abschnittes schließt sich ein zweiter Abschnitt mit einer sich in einer Richtung senkrecht zur Achse des zylindrischen Abschnittes erstreckenden Ausnehmung 73 an. Die Wandung zwischen der Ausnehmung 73 und dem Inneren des zylindrischen Abschnittes 72 weist eine Ausnehmung auf, in die ein am besten aus Figur 8 ersichtliches Verriegelungsteil 74 eingesetzt ist. Das Verriegelungsteil weist einen mit einer Schraube 76 zusammenwirkendes Innengewinde aufweisenden ersten Block 75 auf. Der zweite Block 77 weist eine eine Schraube 76 aufnehmende Bohrung auf. Die beiden Blöcke weisen zwei symmetrisch zueinander ausgerichtete prismatische Abschnitte mit Widerlagerflächen 78, 79 auf, die zueinander geneigt sind, wie dies am besten aus Figur 8 ersichtlich ist. Die Neigung der Flächen 78, 79 ist so gewählt, daß sie im wesentlichen mit der Tangentialrichtung der Innenwand des zylinderförmigen Abschnittes übereinstimmen, wenn die beiden Blöcke einen Abstand voneinander aufweisen. Die Ausnehmung 73 ist so geformt, daß sie nach Einsetzen des Verriegelungsteiles 74 die Querverstrebung 68 gerade aufnehmen kann. Ist die Schraube 76 gelöst, kann sowohl die Querverstrebung 68 in der Ausnehmung 73 hin- und herbewegt werden, als auch das Gelenk 69 auf der Stange 71 nach oben bzw. unten verschoben werden. Wird die Schraube 76 angezogen, werden die beiden Blöcke aufeinanderzubewegt, was zur Folge hat, daß einerseits ein Klemmdruck auf die Stange 71 ausgeübt wird. Andererseits werden die Blöcke durch Aufeinanderzubewegen in Richtung der Ausnehmung 73 bewegt, so daß durch Anziehen einer einzigen Schraube gleichzeitig eine Verriegelung mit der Stange 71 und der Querverstrebung 68 erfolgt.

Die jeweilige Halterung 44 zum Verbinden von dem armförmigen zweiten Teil 43 mit der zugehörigen Stange weist, wie am besten aus Figur 6 ersichtlich ist, eine Arretierung 80 auf, die so ausgebildet ist, daß durch Lösen einer Schraube die Stange in der Halterung nach oben bzw. unten verschiebbar ist.

In dem in Figur 4 gezeigten Ausführungsbeispiel sind die Arme 43′, 43″ direkt durch geeignete Schraubverbindungen mit den Nuten verbunden. Die Querverstrebung 68 ist mit den Armen 43′, 43″ verbunden. Und an der Querverstrebung 68 sind die Stangen über den Gelenken 69, 70 entsprechende Gelenke verbunden, so daß einerseits die Stangen auf der Querverstrebung 68 hin- und herschiebbar und andererseits nach oben und unten verschiebbar sind.

Die an den Stangen zu befestigenden Geräte weisen jeweils Schellen oder Klemmen auf, mit denen sie an den Stangen befestigbar sind.

## Ansprüche

1. Geräteträger mit einer Tragsäule (2) zum Aufnehmen von Halteelementen für Geräte und mit Zuführungen zum Betreiben von Geräten oder ähnlichem, dadurch gekennzeichnet, daß die Tragsäule (2) aus zwei Profilteilen (7,8) besteht, die durch zwei quer dazu verlaufende Wandteile (13, 14) derart miteinander verbunden sind, daß diese zusammen einen zur Versorgung dienenden Kanal (15) umgeben, und daß die Profilteile (7,8) wenigstens eine sich in Längsrichtung erstreckende Nut (18 - 21) zum Aufnehmen eines in der Nut verschiebbaren und um eine Achse relativ zur Tragsäule schwenkbaren Halteelements (40) aufweist.

2. Geräteträger nach Anspruch 1, dadurch gekennzeichnet, daß die Tragsäule (2) auf zwei einander gegenüberliegenden Seiten jeweils eine sich in Längsrichtung erstreckende Nut (18 - 21) aufweist und auf jeder Seite ein entsprechendes Halteelement (40) vorgesehen ist.

3. Geräteträger nach Anspruch 1, dadurch gekennzeichnet, daß die Nut einen "T"-förmigen Querschnitt aufweist.

4. Geräteträger nach einem der Ansprüche 1 bis 3, dadurch gekennzeichnet, daß das Halteelement (40) ein in der Nut getragenes erstes Teil (41) und ein damit gelenkig verbundenes zweites Teil (43) aufweist und das zweite Teil eine Tragstange (45) zum Aufnehmen von Pumpen und ähnlichem aufweist.

5. Geräteträger nach Anspruch 2, dadurch gekennzeichnet, daß die beiden Halteelemente (40) durch eine Querverstrebung (68) verbindbar sind.

6. Geräteträger nach einem der Ansprüche 4 bis 5, dadurch gekennzeichnet, daß die Tragstangen (45) sich im wesentlichen parallel zur Längsrichtung der Tragsäule (2) erstrecken.

7. Geräteträger nach einem der Ansprüche 4 bis 6, dadurch gekennzeichnet, daß die gelenkige Verbindung arretierbar ist.

8. Geräteträger nach Anspruch 1, dadurch gekennzeichnet, daß die Halteelemente (40) durch Arme (43′, 43″) mittels Schraubverbindungen in den Nuten (18 - 21) befestigt sind, wobei die Arme (43′, 43″) Langlöcher aufweisen, um eine Tiefenverstellung der Halteelemente zu ermöglichen.

9. Geräteträger nach Anspruch 1, dadurch gekennzeichnet, daß in die Nuten (18 - 21) Halteelemente (26, 27, 28, 29) zur Befestigung von tischförmigen Geräteträgern (30) einsetzbar sind.

Fig. 1

Fig.2

Fig. 3

Fig. 8

Fig. 4

Fig. 4

Fig. 6

Fig. 5a

Fig. 5

Fig. 7